# EUROPEAN PATENT APPLICATION

(11) **EP 4 725 673 A1**
(43) Date of publication of application: **15.04.2026**
(21) Application number: 24818663.7
(22) Date of filing: 05.06.2024
(51) Int. Cl.: B29C 39/10, G09F 9/37, B29C 45/16

(54) **INJECTION MOLDING METHOD FOR DUAL-COLOR LENS, AND ELECTRONIC SHELF LABEL**

(30) Priority: 08.06.2023 CN 202310679409; 08.06.2023 CN 202321459449 U
(71) Applicant: Hanshow Technology Co., Ltd., Jiaxing, Zhejiang 314031 (CN)
(72) Inventor: XU, Hongming, Jiaxing, Zhejiang 314031 (CN); WANG, Linjiang, Jiaxing, Zhejiang 314031 (CN); SHEN, Hongbo, Jiaxing, Zhejiang 314031 (CN)
(74) Representative: Boult Wade Tennant LLP
(86) International application number: PCT/CN2024/097412
(87) International publication number: WO 2024/251131

(57) **Abstract**

The present disclosure provides an injection molding method for a dual-color lens and an electronic shelf label. The injection molding method for the dual-color lens includes: positioning a first mold in a horizontal direction; feeding a first material in a molten state into a cavity of the first mold through a first pouring gate on the first mold, for injection molding a first-color lens in a flat plate-shape along the horizontal direction; and feeding a second material in a molten state into a cavity of a second mold through a second pouring gate on a second mold, for injection molding a second-color lens on the first-color lens. The present disclosure solves the technical problem of poor injection molding effect of dual-color lens that impacts the product quality.

## Description

### RELATED APPLICATIONS

The present application claims priority to Chinese Patent Application No. 202310679409.X, filed on June 08, 2023 and entitled "Injection Molding Method for Dual-Color Lens and Electronic Shelf Label" and the Chinese Utility Model Patent Application No. 202321459449.5, filed on June 08, 2023 and entitled "Lens Structure, Mold and Electronic Shelf Label".

### TECHNICAL FIELD

The present disclosure relates to the field of the electronic shelf label, in particular to an injection molding method for a dual-color lens, a lens structure, a mold and an electronic shelf label.

### BACKGROUND

At the current stage, as made of Polycarbonate (PC) material, a dual-color transparent lens fails to achieve a 3H hardness (the surface hardness 3H test standard: load 750g, using a Mitsubishi 3H pencil for testing, no scratches on the surface). Currently, the lens solutions for the electronic shelf label mainly include the following:
1. In-Mold Labeling (IML) process, the disadvantage of which lies in: the cost is high, and the hardness still cannot meet the 3H test standard;
2. Injection molding and screen printing, the disadvantage of which lies in: since a pattern needs to be screen-printed, the back of the lens has to be flat, and it is impossible to design an internal structure;
3. Sheet cutting and screen printing, the disadvantage of which lies in: since a pattern needs to be screen-printed, the back of the lens has to be flat, and it is not only impossible to design an internal structure, but also impossible to create complex curved shapes on the sheet.

Regarding the issues in the related art where the lens of the electronic shelf label has insufficient hardness and cannot incorporate additional structures, no effective solution has been proposed so far.

In addition, since the lens is in a flat plate shape and needs to be moved during molding, and it is difficult to achieve stable shaping within existing molds, not only the requirements for lens shape are difficult to meet, but also misalignment, compression cracking or compression is prone to occur during injection molding, which affects the quality of the finished product.

Regarding the problem of poor injection molding effect of the dual-color lens, and the resulting impact on the product quality, no effective solution has been proposed so far.

Accordingly, the inventor, based on years of experience and practice in relevant industries, proposes an injection molding method for a dual-color lens and an electronic shelf label to overcome the deficiencies of the prior art.

### SUMMARY

The object of the present disclosure is to provide an injection molding method for a dual-color lens and an electronic shelf label to effectively reduce the occurrence of compression cracking, compression whitening or the like during injection molding of the dual-color lens, and minimize the risk of impact-induced melting.

The above object of the present disclosure is realized by the following technical solutions:

The present disclosure provides an injection molding method for a dual-color lens, including:
positioning a first mold in a horizontal direction;
feeding a first material in a molten state into a cavity of the first mold through a first pouring gate on the first mold, for injection molding a first-color lens in a flat plate-shape along the horizontal direction;
feeding a second material in a molten state into a cavity of the second mold through a second pouring gate on a second mold, for injection molding a second-color lens on the first-color lens.

The present disclosure provides a lens structure, which is used for a screen lens of an electronic shelf label, the lens structure including:
a lens main body, and the lens main body is a transparent lens, a hardness of the lens main body is greater than or equal to a preset hardness; and
a frame, and the frame is in a colored annular shape, the frame is connected to the lens main body along an edge of the lens main body, the frame and the lens main body enclose to form a recess, and a functional structural component is provided on the frame and/or within the recess.

A melting point of the material used for the lens main body is higher than that of the material used for the frame.

In an optional embodiment of the present disclosure, the lens main body and the frame are bonded to form an integral structure.

In an optional embodiment of the present disclosure, the lens main body is provided with a light hole for allowing light to pass through.

In an optional embodiment of the present disclosure, the functional structural component includes a heat-staking post for fixing a circuit board, and the heat-staking post is located in the recess.

In an optional embodiment of the present disclosure, the functional structural component includes a plurality of first snap-fit members for snap-fit connection with a main body of an electronic shelf label, and the plurality of first snap-fit members are disposed at intervals on the frame.

In an optional embodiment of the present disclosure, the functional structural component includes a barcode area for placing of a barcode, and the barcode area is located on the frame.

In an optional embodiment of the present disclosure, the functional structural component includes an ultrasonic welding line for ultrasonic welding, and the ultrasonic welding line is located in a welding area preset on the frame.

In an optional embodiment of the present disclosure, the preset hardness is a 3H hardness.

In an optional embodiment of the present disclosure, the lens main body is made of polymethyl methacrylate with a hardness greater than the 3H hardness.

In an optional embodiment of the present disclosure, the frame is made of Acrylonitrile Butadiene Styrene (ABS) plastic, or a composite material of ABS plastic and polycarbonate.

The present disclosure provides a mold used for injection molding the above lens structure, including:
a first injection molding part, and the first injection molding part is configured to injection mold a lens main body in the lens structure;
a second injection molding part, and the second injection molding part is configured to injection mold a frame in the lens structure.

In an optional embodiment of the present disclosure, the first injection molding part is provided with at least one first pouring gate, and the first pouring gate is located on the lens main body at a position corresponding to a light hole.

In an optional embodiment of the present disclosure, the second injection molding part is provided with at least one second pouring gate, and an flow area of the second pouring gate increases gradually along a flow direction of an injection molding material.

The present disclosure further provides an electronic shelf label, including:
a rear housing;
a battery, and the battery is disposed inside the rear housing;
a screen, and the screen is connected to a circuit board; and
the electronic shelf label further including:
a dual-color lens formed by the above injection molding method for the dual-color lens, and the dual-color lens is connected to the rear housing, the screen and the circuit board are located between the dual-color lens and the rear housing; or
a lens structure as described above, and the lens structure is connected to the rear housing, the screen and the circuit board are located between the lens structure and the rear housing.

Advantageous effects of the present disclosure are:
1. In the injection molding method for the dual-color lens, the surface hardness of the first-color lens at least can meet the 3H test standard, and has the advantage of strong surface wear resistance.
2. The injection molding method for the dual-color lens employs a two-shot injection molding process. The resulting product exhibits smooth and natural aesthetics, and enables the design of complex internal structures without compromising its appearance.
3. In the injection molding method for the dual-color lens, since the first-color lens can be in the transparent flat plate-shape, the visual effect of impact-induced melting on the first-color lens can be minimized, which avoids the occurrence of edge deformation and/or discoloration of the first-color lens, and helps to improve the overall quality of the dual-color lens.
4. In the injection molding method for the dual-color lens, since the melting point of the first material is higher than that of the second material, the first-color lens and the second-color lens can be sequentially injection molded, which reduces the risk of impact-induced melting.
5. In the injection molding method for the dual-color lens, the flow area of the second pouring gate increases gradually in the flow direction of the second material, which can reduce the impact force exerted by the material on the first-color lens during injection molding of the second-color lens, and accordingly the occurrence rate of impact-induced melting during injection molding of the dual-color lens is effectively reduced, and the risk of impact-induced melting fusion is further lowered.
6. In the injection molding method for the dual-color lens, pin point gate injection through the first pouring gate is adopted to perform the injection molding of the first-color lens. After the injection molding is completed, the first material is automatically sheared off, which can avoid the occurrence of brittle fracture and notch formation when carrying out the injection molding through the first pouring gate; in addition, arranging the first pouring gate on the first mold at a position corresponding to the light hole on the first-color lens provides excellent concealment and enhances the visual appeal.
7. In the injection molding method for the dual-color lens, the plurality of positioning members cooperate to tightly abut against the side edges of the first-color lens, so that stable molding of the first-color lens can be ensured, the occurrence of compression cracking, compression whitening or the like are avoided, and product quality is therefore guaranteed.
8. The hardness of the lens main body is greater than or equal to a preset hardness, so that the lens structure can be ensured to meet the preset hardness requirements and has the advantage of strong surface wear resistance. In addition, the frame is provided along an edge of the lens main body. Since the frame is a colored annular structure and the lens main body is a transparent lens, different colors can be configured as required. By allowing the frame and the lens main body to enclose a recess, the functional structural component can be provided on the frame and/or in the recess, so that the design of functional structural component within the lens structure is achieved, the user experience of the lens structure is improved, and its service life is extended.

### BRIEF DESCRIPTION OF DRAWINGS

The following figures are only intended to provide illustrative descriptions and explanations of the present disclosure, rather than to limit the scope of the present disclosure. In the figures:
FIG. 1 illustrates a flowchart of the injection molding method for a dual-color lens according to an embodiment of the present disclosure;
FIG. 2A is a first perspective view of the dual-color lens formed by the injection molding method for a dual-color lens according to an embodiment of the present disclosure;
FIG. 2B is a second perspective view of the dual-color lens formed by the injection molding method for a dual-color lens according to an embodiment of the present disclosure;
FIG. 3 is a front view of the dual-color lens formed by the injection molding method for a dual-color lens according to an embodiment of the present disclosure;
FIG. 4 is a front view of the dual-color lens in a separated state formed by the injection molding method for a dual-color lens according to an embodiment of the present disclosure;
FIG. 5A is a first perspective view of the dual-color lens formed by the injection molding method for a dual-color lens according to anther embodiment of the present disclosure;
FIG. 5B is a second perspective view of the dual-color lens formed by the injection molding method for a dual-color lens according to anther embodiment of the present disclosure;
FIG. 6A is a top view of the first-color lens from a first perspective formed by the injection molding method for a dual-color lens according to an embodiment of the present disclosure;
FIG. 6B is a top view of the first-color lens from a second perspective formed by the injection molding method for a dual-color lens according to an embodiment of the present disclosure;
FIG. 7 is a schematic diagram of a position of a second pouring gate in the injection molding method a dual-color lens according to an embodiment of the present disclosure;
FIG. 8 is a structure schematic diagram of the positioning member tightly abutting against the first-color lens in the injection molding method for a dual-color lens according to an embodiment of the present disclosure;
FIG. 9 is a local schematic diagram of the positioning members tightly abutting against the first-color lens in the injection molding method for a dual-color lens according to an embodiment of the present disclosure;
FIG. 10A is a first perspective exploded view of the electronic shelf label according to an embodiment of the present disclosure;
FIG. 10B is a second perspective exploded view of the electronic shelf label according to an embodiment of the present disclosure;
FIG. 11 is a structure schematic diagram of the battery and the rear housing in the electronic shelf label in a separated state according to an embodiment of the present disclosure;
FIG. 12 is a schematic diagram of a connection structure between the screen and the circuit board in the electronic shelf label according to an embodiment of the present disclosure;
FIG. 13A is a first perspective schematic diagram of the screen and circuit board and the dual-color lens in the electronic shelf label in a separated state according to an embodiment of the present disclosure;
FIG. 13B is a second perspective schematic diagram of the screen and circuit board and the dual-color lens in the electronic shelf label in a separated state according to an embodiment of the present disclosure;
FIG. 14A is a first perspective schematic diagram of the screen and circuit board and the dual-color lens in the electronic shelf label in an assembled state according to an embodiment of the present disclosure;
FIG. 14B is a second perspective schematic diagram of the screen and circuit board and the dual-color lens in the electronic shelf label in an assembled state according to an embodiments of the present disclosure;
FIG. 15A is a first perspective schematic diagram of the dual-color lens and the rear housing in the electronic shelf label in a separated state according to an embodiment of the present disclosure;
FIG. 15B is a second perspective schematic diagram of the dual-color lens and the rear housing in the electronic shelf label in a separated state according to an embodiment of the present disclosure;
FIG. 16A is a first perspective schematic diagram of a connection structure between the battery and the circuit board in the electronic shelf label according to an embodiment of the present disclosure;
FIG. 16B is a second perspective schematic diagram of a connection structure between the battery and the circuit board in the electronic shelf label according to an embodiment of the present disclosure;
FIG. 17A is a first perspective view of the lens structure according to an embodiment of the present disclosure;
FIG. 17B is a second perspective view of the lens structure according to an embodiment of the present disclosure;
FIG. 18 is a front view of the lens structure according to an embodiment of the present disclosure;
FIG. 19 is a front view of the lens body and the frame in a separated state according to an embodiment of the present disclosure;
FIG. 20A is a first perspective view of the lens structure according to an embodiment of the present disclosure;
FIG. 20B is a second perspective view of the lens structure according to an embodiment of the present disclosure;
FIG. 21A is a top view of the lens main body from a first perspective according to an embodiment of the present disclosure;
FIG. 21B is a top view of the lens main body from a second perspective according to an embodiment of the present disclosure;
FIG. 22A is a first perspective exploded view of the electronic shelf label according to another embodiment of the present disclosure;
FIG. 22B is a second perspective exploded view of the electronic shelf label in an exploded state from another perspective according to another embodiment of the present disclosure;
FIG. 23A is a first perspective schematic diagram of the screen and circuit board and the lens structure in the electronic shelf label in a separated state according to an embodiment of the present disclosure;
FIG. 23B is a second perspective schematic diagram of the screen and circuit board and the lens structure in the electronic shelf label in a separated state according to an embodiment of the present disclosure;
FIG. 24A is a first perspective schematic diagram of the screen and circuit board and the lens structure in the electronic shelf label in an assembled state according to an embodiment of the present disclosure;
FIG. 24B is a second perspective schematic diagram of the screen and circuit board and the lens structure in the electronic shelf label in an assembled state according to an embodiment of the present disclosure;
FIG. 25A is a first perspective schematic diagram of the lens structure and the rear housing in the electronic shelf label in a separated state according to an embodiment of the present disclosure;
FIG. 25B is a second perspective schematic diagram of the lens structure and the rear housing in the electronic shelf label in a separated state according to an embodiment of the present disclosure;
FIG. 26A is a schematic diagram of a connection structure between the battery and the circuit board in the electronic shelf label according to an embodiment of the present disclosure;
FIG. 26B is a schematic diagram of a connection structure between the battery and the circuit board in the electronic shelf label according to an embodiment of the present disclosure.

### DESCRIPTION OF EMBODIMENTS

To allow for clearer understandings of the technical features, object and effects of the present disclosure, specific embodiments of the present disclosure are now described with reference to the drawings.

### Embodiment 1

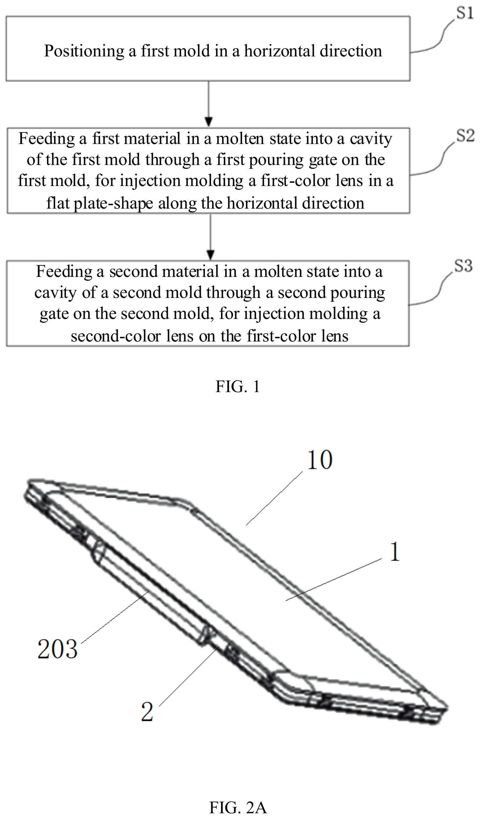

As shown in FIG. 1, the present disclosure provides an injection molding method for a dual-color lens, including the steps of:
Step S1: positioning a first mold in a horizontal direction;
Step S2: feeding a first material in a molten state into a cavity of the first mold through a first pouring gate on the first mold, for injection molding a first-color lens 1 in a flat plate-shape along the horizontal direction;
Step S3: feeding a second material in a molten state into a cavity of a second mold through a second pouring gate 5 on the second mold, for injection molding a second-color lens 2 on the first-color lens 1.

In the present disclosure, the first mold is positioned in the horizontal direction in advance. The first material in a molten state is fed into the cavity of the first mold through the first pouring gate on the first mold, for injection molding the first-color lens 1 in a flat plate-shape along the horizontal direction. By positioning the first mold in advance, it is ensured that the first lens 1 in a flat plate-shape can be stably molded in the horizontal direction, avoiding the occurrence of compression cracking, compression whitening or the like. After the injection molding of the first-color lens 1 is completed, the second material in a molten state is fed into the cavity of the second mold through the second pouring gate 5 on the second mold to injection mold the second-color lens 2 on the first-color lens 1. The risk of impact-induced melting can be effectively reduced, and product quality can be guaranteed.

The first material may be, but is not limited to polymethyl methacrylate (PMMA) whose hardness is greater than a 3H hardness (after injection molding, the surface hardness of the first-color lens 1 meets the 3H test standard), and its melting point is about 270 °C; the second material may be, but is not limited to Acrylonitrile Butadiene Styrene (ABS) plastic whose melting point is about 230 °C. Of course, the second material may also be a composite material of ABS plastic and polycarbonate. The composite material of ABS plastic and polycarbonate has better strength than ABS plastic, and according to the requirements of the injection molding process, the physical properties of the material can be conveniently adjusted to improve product quality. The composite material of ABS plastic and polycarbonate is a mixture of ABS plastic and polycarbonate, and is a currently available material, and limitations are made here to the ABS plastic content and polycarbonate content in the composite material.

Since the first-color lens 1 and the second-color lens 2 are made of two different materials, impact-induced melting is prone to occur during respective injection molding of the first-color lens 1 and the second-color lens 2 (for example, after the first-color lens 1 is initially injection molded, the first-color lens 1 may deform or discoloration due to the impact it suffers during injection molding of the second-color lens 2), which is prone to cause problems such as damage to the appearance pattern of the lens or uneven color of the lens. Therefore, in the present disclosure, the melting point of the first material is set to be higher than that of the second material, so that the first-color lens 1 and the second-color lens 2 can be sequentially injection molded (that is, after the first-color lens 1 is injection molded, the second-color lens 2 is then injection molded). To be specific, since the melting point of the material used for the first-color lens 1 is higher than that of the material used for the second-color lens 2, the first-color lens 1 is injection molded in advance, and the second-color lens 2 having a lower melting point is injection molded after the first-color lens 1 is injection molded, ensuring that the first-color lens 1 is not damaged, thereby achieving the purpose of sequentially injection molding the first-color lens 1 and the second-color lens 2. In addition, a transparent lens is adopted as the first-color lens 1 in the present disclosure. During injection molding of the second-color lens 2, the visual impact of impact-induced melting caused to the first-color lens 1 is minimized, which avoids the occurrence of edge deformation and/or discoloration of the first-color lens 1, and helps to improve the overall quality of the dual-color lens.

In an optional embodiment of the present disclosure, the flow area of the second pouring gate 5 is greater than that of the first pouring gate and increases gradually along the flow direction of the second material, so that the impact force of the material on the first-color lens 1 during injection molding of the second-color lens 2 can be reduced, which effectively decreases the occurrence rate of impact-induced melting during injection molding of the dual-color lens and further lowers the risk of impact-induced melting, thereby ensuring product quality.

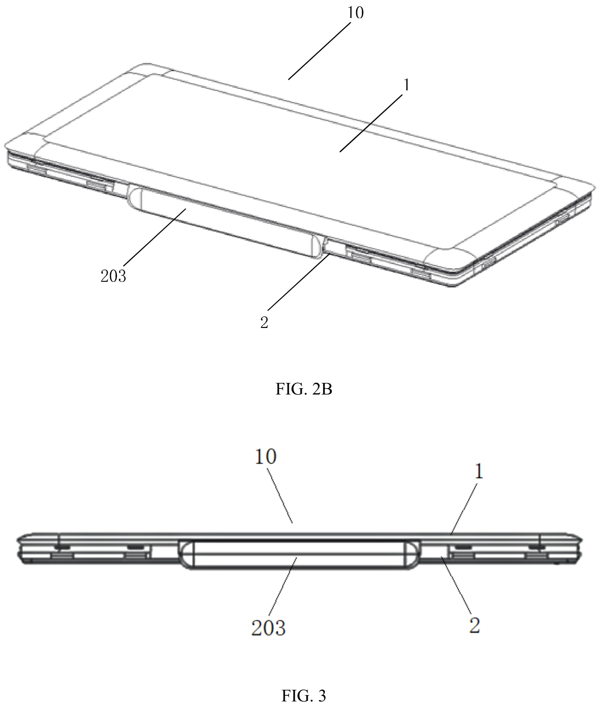

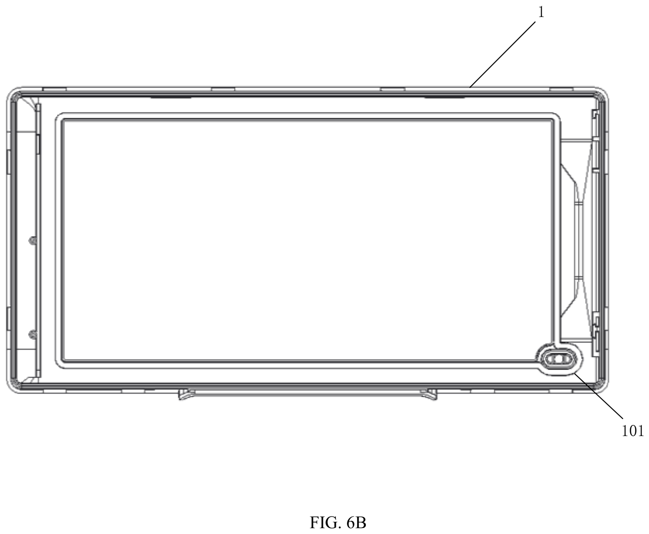

In an optional embodiment of the present disclosure, as shown in FIGS. 2A to 4 and 6A to 6B, the first-color lens 1is a transparent flat plate-shape. The first-color lens 1 is provided with a light hole 101 for allowing light to pass through. The position of the light hole 101 may correspond to the position of a flash lamp; such that light can exit through the light hole 101. The first pouring gate is located on the first mold at a position corresponding to the light hole 101 on the first-color lens 1. The first material is fed through the first pouring gate into the cavity of the first mold, such that the first-color lens 1 is injection molded in the cavity of the first mold. The flash lamp, which has a protruding shape, needs to be provided at the position of the light hole 101, and when the first pouring gate is provided at that position, the shape formed after the injection molding material is automatically sheared off after the completion of the injection molding is also approximate to a circular protrusion, so it can be adapted to the original shape at the light hole 101, maintaining substantially consistent visual appearance. Thus, the appearance effect is improved, and the concealment of the injection molding break point is achieved. By injection molding the first-color lens 1 by pin point gate injection through the first pouring gate, after the completion of the injection molding, the first material can be automatically sheared off, which can avoid the occurrence of brittle fracture and notch formation when performing the injection molding through the first pouring gate.

In an optional embodiment of the present disclosure, as shown in FIGS. 3 to 5B, the second-color lens 2 is in a colored annular. Since the second-color lens 2 in a molten state can be closely fitted to the first-color lens 1 (the first material and the second material are compatible), the second-color lens 2 can be bonded with the first-color lens 1 along an edge of the first-color lens 1 to form an integral structure.

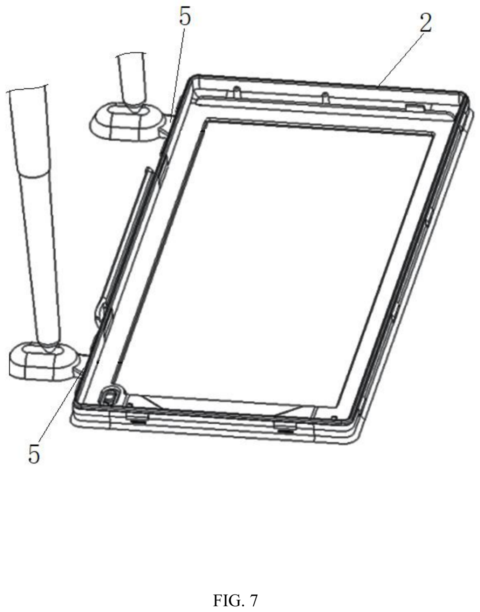

Further, as shown in FIG. 7, the second pouring gate 5 is located on the second mold at a position corresponding to a side edge of the second-color lens 2. The second pouring gate 5 may be fan-shaped or trapezoidal, but is not limited thereto. The flow area of the second pouring gate 5 increases gradually along the flow direction of the second material. Compared with the injection molding mode of pin point gate injection (the injection mode adopted for the first pouring gate), the increase in the flow area of the second pouring gate 5 can reduce the pressure of the second material entering the cavity of the second mold, thus reducing the risk of causing impact-induced melting caused to the first-color lens 1 which has been injection molded to thereby ensure product quality. The first pouring gate may be circular with a diameter of about 1 mm. The second pouring gate 5 may be an elongated shape extending along a length direction of the second-color lens 2. The dimension of the position where the second pouring gate 5 communicates with the cavity of the second mold is about 5 (length) × 0.4 (width) mm.

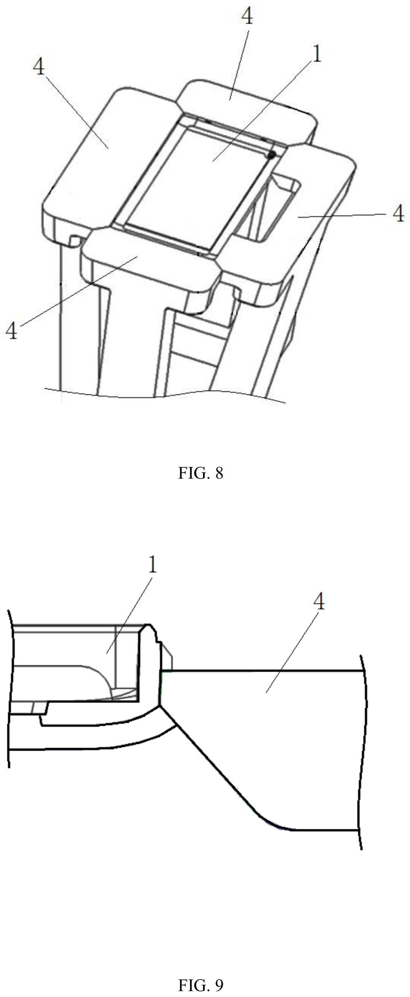

In an optional embodiment of the present disclosure, as shown in FIGS. 8 and 9, since the first-color lens 1 is in the transparent flat plate-shape, it needs to be positioned in a horizontal direction in Steps 1 and 2. A plurality of positioning members 4 are respectively arranged on a periphery of the first mold, and cooperate to tightly abut against the side edges of the first mold, so that the plurality of positioning members 4 can always cooperate to tightly abut against the side edges of the first-color lens 1 during injection molding of the first-color lens 1, thereby ensuring stable formation of the first-color lens 1 and avoiding the occurrence of compression cracking, compression whitening, or the like. To be specific, as shown in FIG. 8, since the first-color lens 1 is rectangular, in this embodiment, at least four positioning members 4 need to be provided to tightly abut against the four side edges of the first mold, respectively, to achieve the purpose of positioning the first-color lens 1.

Further, since injection molding of the first-color lens 1 and of the second-color lens 2 is respectively carried out at different stations (namely, the first-color lens 1 is injection molded at the first station, and the second-color lens 2 is injection molded at the second station), after the first-color lens 1 is injection molded, there is a need of the plurality of positioning members 4 to cooperate to abut tightly against the side edges of the first-color lens 1 and move it from the first station to the second station, and after it is moved to the second station, injection molding of the second-color lens 2 is performed.

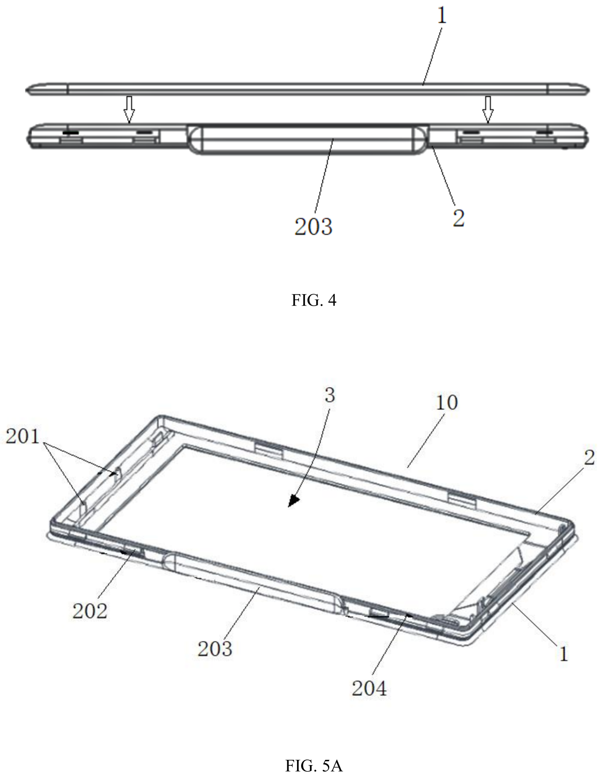

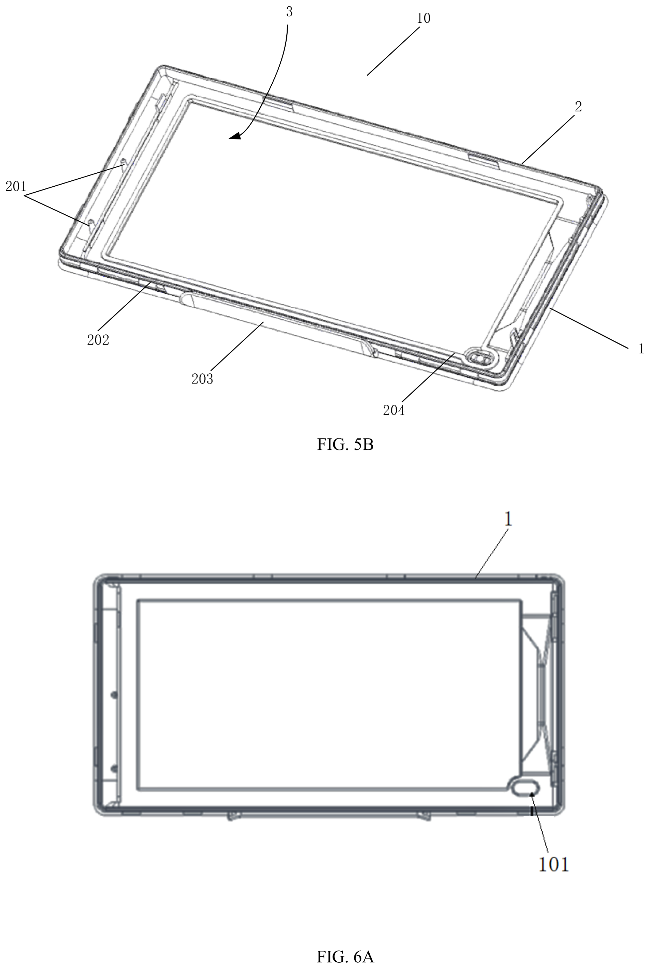

In an optional embodiment of the present disclosure, as shown in FIGS. 5A and 5B, the second-color lens 2 is provided with a plurality of heat-staking posts 201, the plurality of heat-staking posts 201 are located in a recess 3, and the plurality of heat-staking posts 201 can cooperate to fix a circuit board 50. The plurality of heat-staking posts 201 may be injection molded integrally with the second-color lens 2.

In an optional embodiment of the present disclosure, as shown in FIGS. 5A and 5B, the second-color lens 2 is provided with a plurality of first snap-fit members 202, the plurality of first snap-fit members 202 are disposed at intervals on an edge of the second-color lens 2 along a circumferential direction of the second-color lens 2, and the dual-color lens can be snap-fitted and assembled with an electronic shelf label main body by means of the plurality of first snap-fit members 202. The plurality of first snap-fit members 202 may be injection molded integrally with the second-color lens 2.

In an optional embodiment of the present disclosure, as shown in FIGS. 5A and 5B, a barcode area 203 is provided on the second-color lens 2 on a side facing away from the recess 3, and a product barcode may be disposed in the barcode area 203.

In an optional embodiment of the present disclosure, as shown in FIGS. 5A and 5B, a predetermined welding area on the second-color lens 2 is provided with an ultrasonic welding line 204 for ultrasonic welding. The specific position of the predetermined welding area may be set according to the actual requirements, and no limitation is given here.

The characteristics and advantages of the injection molding method for the dual-color lens of the present disclosure are as follows:

1. In the injection molding method for the dual-color lens, the surface hardness of the first-color lens 1 at least can meet the 3H test standard, and it has the advantage of strong surface wear resistance.

2. The injection molding method for the dual-color lens employs a two-shot injection molding process. The resulting product exhibits smooth and natural aesthetics, and enables the design of complex internal structures without compromising its appearance.

3. In the injection molding method for then dual-color lens, since the first-color lens 1 can be in the transparent flat plate-shape, the visual effect of impact-induced melting on the first-color lens can be minimized, which avoids the occurrence of edge deformation and/or discoloration of the first-color lens 1, and helps to improve the overall quality of the dual-color lens.

4. In the injection molding method for the dual-color lens, since the melting point of the first material is higher than that of the second material, the first-color lens 1 and the second-color lens 2 can be sequentially injection molded, which reduces the risk of impact-induced melting.

5. In the injection molding method for the dual-color lens, the flow area of the second pouring gate 5 increases gradually in the flow direction of the second material, which can reduce the impact force exerted by the material on the first-color lens 1 during injection molding of the second-color lens 2, and accordingly the occurrence rate of impact-induced melting during injection molding of the dual-color lens is effectively reduced, and the risk of impact-induced melting is further lowered.

6. In the injection molding method for the dual-color lens, pin point gate injection through the first pouring gate is adopted to perform the injection molding of the first-color lens 1. After the injection molding is completed, the first material is automatically sheared off, which can avoid the occurrence of brittle fracture and notch formation when carrying out the injection molding through the first pouring gate; in addition, arranging the first pouring gate on the first mold at a position corresponding to the light hole on the first-color lens 1 provides excellent concealment and enhances the visual appeal.

7. In the injection molding method for the dual-color lens, the plurality of positioning members 4 cooperate to tightly abut against the side edges of the first-color lens, so that stable molding of the first-color lens can be ensured, the occurrence of compression cracking, compression whitening or the like are avoided, and product quality is therefore guaranteed.

### Embodiment 2

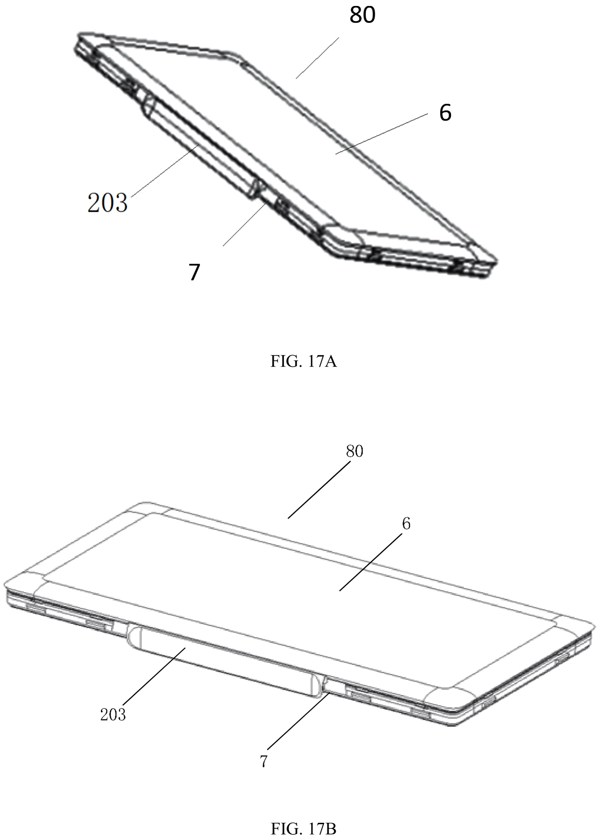

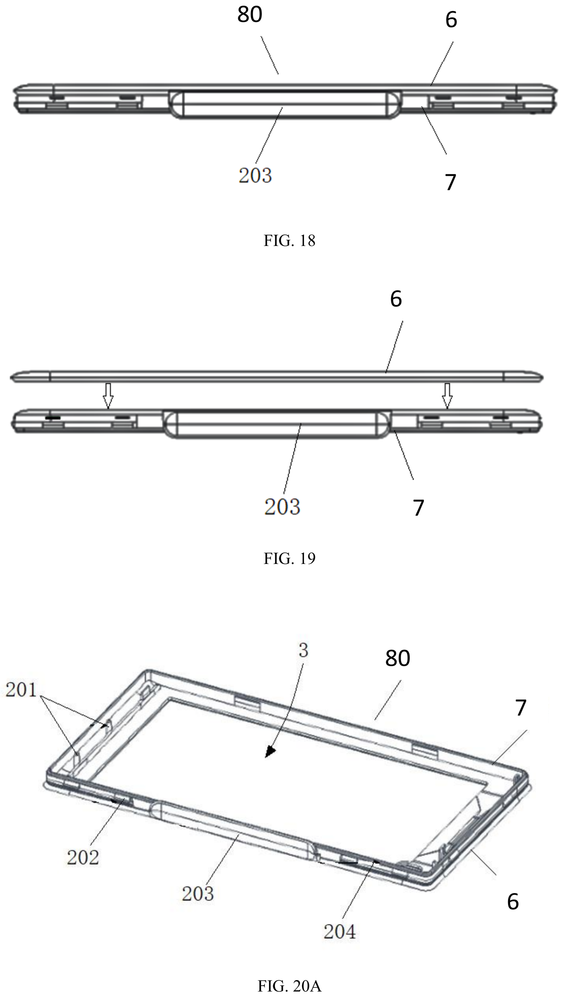

As shown in FIGS. 17A to 21B, the present disclosure provides a lens structure, which is used for a screen lens of an electronic shelf label. The lens structure includes a lens main body 6 and a frame 7. The lens main body 6 is a transparent lens. The hardness of the lens main body 6 is greater than or equal to a preset hardness. The frame 7 is in a colored annular shape. The frame 7 is connected to the lens main body 6 along an edge of the lens main body 6. The frame 7 and the lens main body 6 enclose to form a recess 3, and a functional structural component is provided on the frame and/or within the recess 3.

The preset hardness can be set as desired. In a specific embodiment of the present disclosure, the present hardness may be at least greater than or equal to a 3H hardness (that is, the lens main body 6 meets the surface hardness 3H test standard).

In the present disclosure, the hardness of the lens main body 6 is greater than or equal to the preset hardness, so that the lens structure can be ensured to meet the preset hardness requirement and has the advantage of strong surface wear resistance. In addition, the frame 7 is provided along an edge of the lens main body 6. Since the frame 7 is in a colored annular shape and the lens main body 6 is a transparent lens, the frame 7 may be configured to have different colors on demand. By allowing the frame 7 and the lens main body 6 to enclose to form the recess 3, the functional structural component can be provided on the frame 7 and/or within the recess 3, so that the design of the functional structural component within the lens structure is achieved, the user experience of the lens structure is improved, and its service life is extended.

In an optional embodiment of the present disclosure, the melting point of the material used for the lens main body 6 is higher than that of the material used for the frame 7, so that the lens main body 6 and the frame 7 can be sequentially injection molded. To be specific, since the melting point of the material used for the lens main body 6 is higher than that of the material used for the frame 7, the lens main body 6 is injection molded in advance, and the frame 7 having a lower melting point is injection molded after the lens main body 6 is injection molded, ensuring that the lens main body 6 is not damaged, thereby achieving the purpose of sequentially injection molding the lens main body 6 and the frame 7. In addition, a transparent lens is adopted as the lens main body 6 in the present disclosure. During injection molding of the frame 7, the visual impact of impact-induced melting caused to the lens main body 6 is minimized, which avoids the occurrence of edge deformation and/or discoloration of the lens main body 6, and helps to improve the overall quality of the dual-color lens.

The lens main body 6 may be made of polymethyl methacrylate (PMMA) of which the hardness is greater than the 3H hardness and the melting point is about 270 °C, but is not limited thereto. The frame 7 may be made of Acrylonitrile Butadiene Styrene (ABS) plastic of which the melting point is about 230 °C. Of course, the frame 7 may also be made of a composite material of ABS plastic and polycarbonate. The composite material of ABS plastic and polycarbonate has better strength than ABS plastic, and according to the requirements of the injection molding process, the physical properties of the material can be conveniently adjusted to improve product quality. The composite material of ABS plastic and polycarbonate is a mixture of ABS plastic and polycarbonate and is a currently available material, and limitations are made here to the ABS plastic content and polycarbonate content in the composite material.

Further, since the frame 7 in a molten state can be closely fitted to the lens main body 6 (the material used for the frame 7 and the material used for the lens main body 6 are compatible), the lens main body 6 and the frame 7 may be bonded together to form an integral structure.

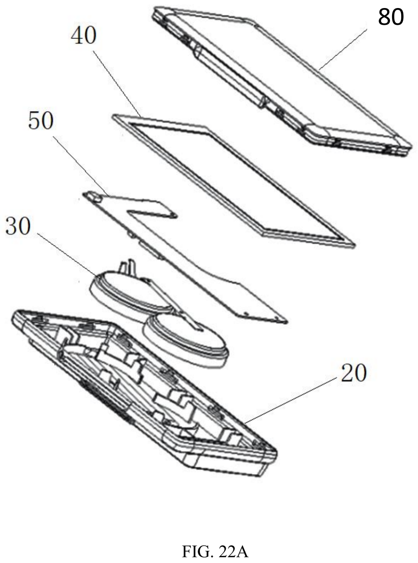

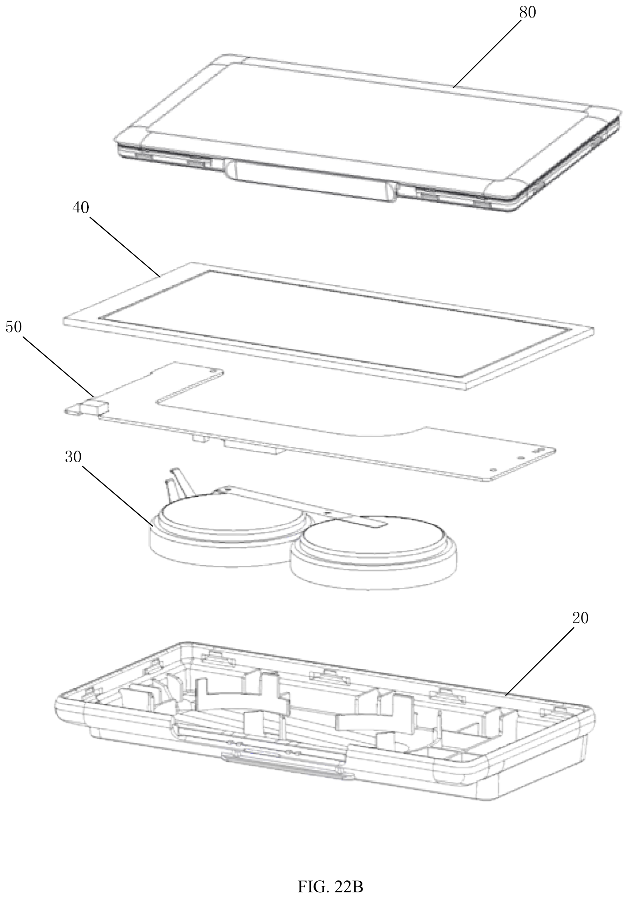

In an optional embodiment of the present disclosure, as shown in FIGS. 22A and 22B, the lens main body 6 is provided with a light hole 101 for allowing light to pass through. The position of the light hole 101 may correspond to the position where a flash lamp is located, such that light can exit through the light hole 101.

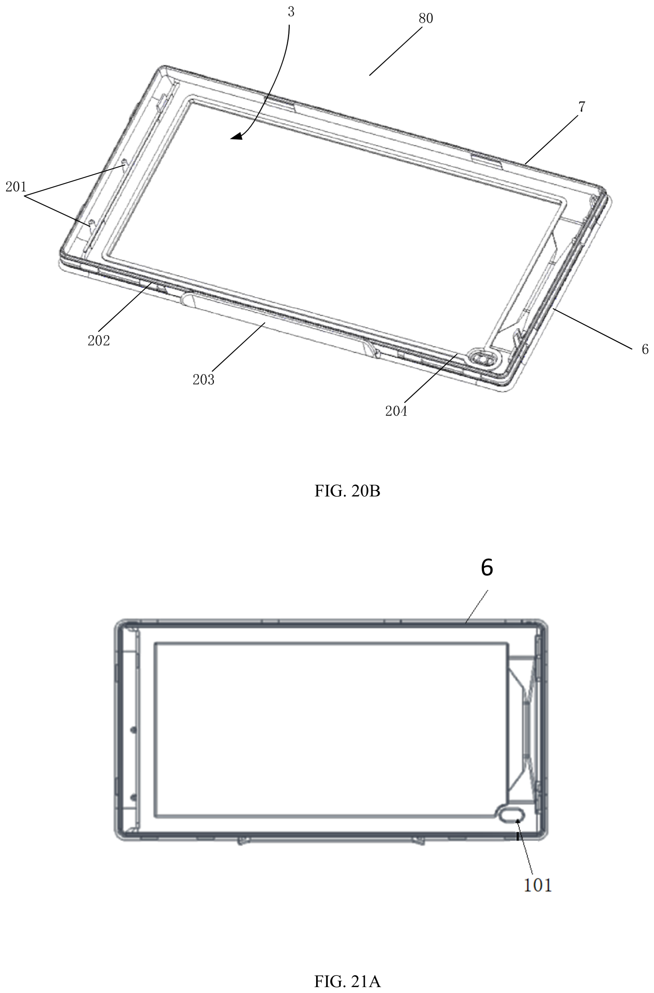

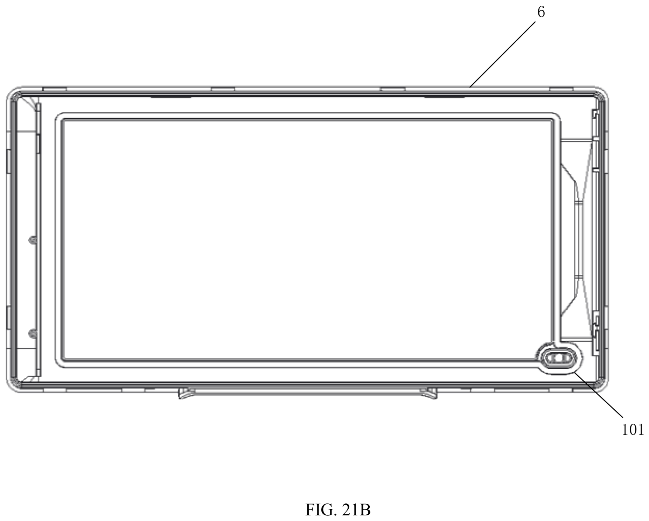

In an optional embodiment of the present disclosure, as shown in FIGS. 21A and 21B, the functional structural component includes a plurality of heat-staking posts 201, the plurality of heat-staking posts are located in the recess 3, and the plurality of heat-staking posts 201 can cooperate to fix a circuit board 50. The plurality of heat-staking posts 201 may be injection molded integrally with the frame 7.

In an optional embodiment of the present disclosure, as shown in FIGS. 21A and 21B, the functional structural component includes a plurality of first snap-fit members 202, the plurality of first snap-fit members 202 are disposed at intervals on the frame 7, and the lens structure can be snap-fitted and assembled with an electronic shelf label main body by means of the plurality of first snap-fit members 202. The plurality of first snap-fit members 202 may be injection molded integrally with the frame 7.

In an optional embodiment of the present disclosure, as shown in FIGS. 21A and 21B, the functional structural component includes a barcode area 203, the barcode area 203 is located on the frame 7 on a side facing away from the recess 3, and a product barcode may be disposed in the barcode area 203.

In an optional embodiment of the present disclosure, as shown in FIGS. 21A and 21B, the functional structural component includes an ultrasonic welding line 204 for ultrasonic welding, and the ultrasonic welding line 204 is located in a welding area preset on the frame 7. The specific position of the preset welding area can be set based on the actual requirements, and no limitation is made here.

The characteristics and advantages of the lens structure of the present disclosure are as follows:
1. In the lens structure, the hardness of the lens main body 6 is greater than or equal to a preset hardness, which can ensure that the lens structure meets the preset hardness requirements and has the advantage of strong surface wear resistance.
2. The lens structure may be configured to have different colors. By allowing the frame 7 and the lens main body 6 to enclose to form the recess 3, the functional structural component can be provided on the frame 7 and/or within the recess 3, so that the design of functional structural component within the lens structure is achieved, the user experience of the lens structure is improved, and its service life is extended.

### Embodiment 3

The present disclosure further provides a mold used for injection molding the above lens structure 80, the mold including a first injection molding part and a second injection molding part, the first injection molding part is configured to injection mold the lens main body 6 in the lens structure, the second injection molding part is configured to injection mold the frame 7 in the lens structure 80.

In an optional embodiment of the present disclosure, the first injection molding part is provided with at least one first pouring gate, and the first pouring gate is located at a position corresponding to the light hole 101 on the lens main body 6 in FIGS. 21A and 21B. The injection molding material is fed through the first pouring gate into the cavity of the first injection molding part, so that the lens main body 6 is injection molded in the cavity of the first injection molding part. A flash lamp, which is has a protruding shape, needs to be provided at the position of the light hole 101, and when the first pouring gate is provided at that position, the shape formed after the injection molding material is automatically sheared off after the completion of the injection molding is also approximate to a circular protrusion, so it can be adapted to the original shape at the light hole 101, maintaining substantially consistent visual appearance. In this way, the appearance effect is improved, and the concealment of the injection molding break point is achieved.

In an optional embodiment of the present disclosure, the second injection molding part has at least one second pouring gate. The flow area of the second pouring gate increases gradually along the flow direction of the injection molding material (that is, it is in a flared shape or a trumpet shape). Compared with the injection molding mode of pin point gate injection, the increase in the flow area of the second pouring gate can reduce the pressure of the injection molding material entering the cavity of the second injection molding part, so that the risk of causing impact-induced melting to the pre-molded lens main body 6 can be reduced to thereby ensure product quality. The pouring gate for pin point injection is generally circular with a diameter of about 1 mm. However, in this embodiment, the second pouring gate may be an elongated shape extending in a length direction of the frame 7, and the dimension of the position where the second pouring gate communicates with the cavity of the second injection molding part is about 5 (length) × 0.4 (width) mm.

### Embodiment 4

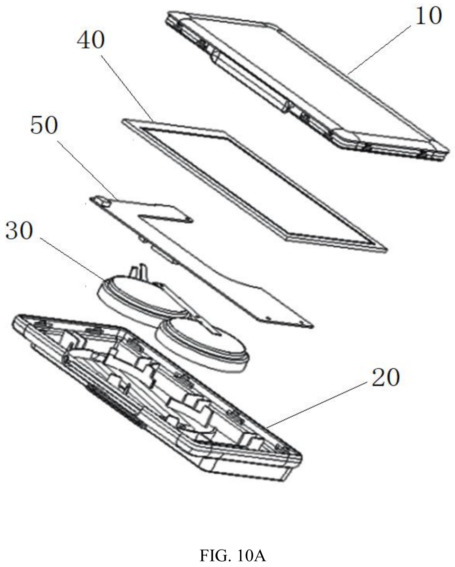

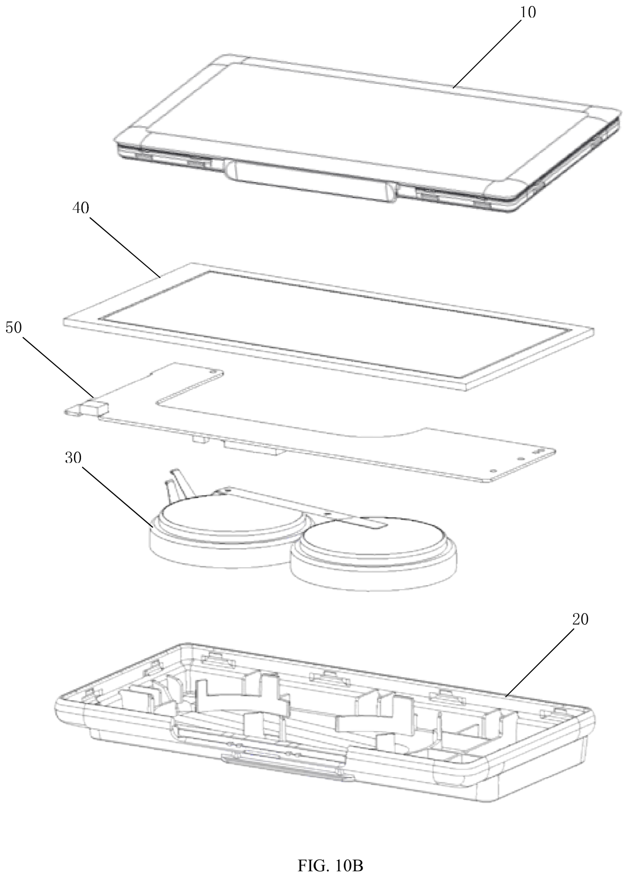

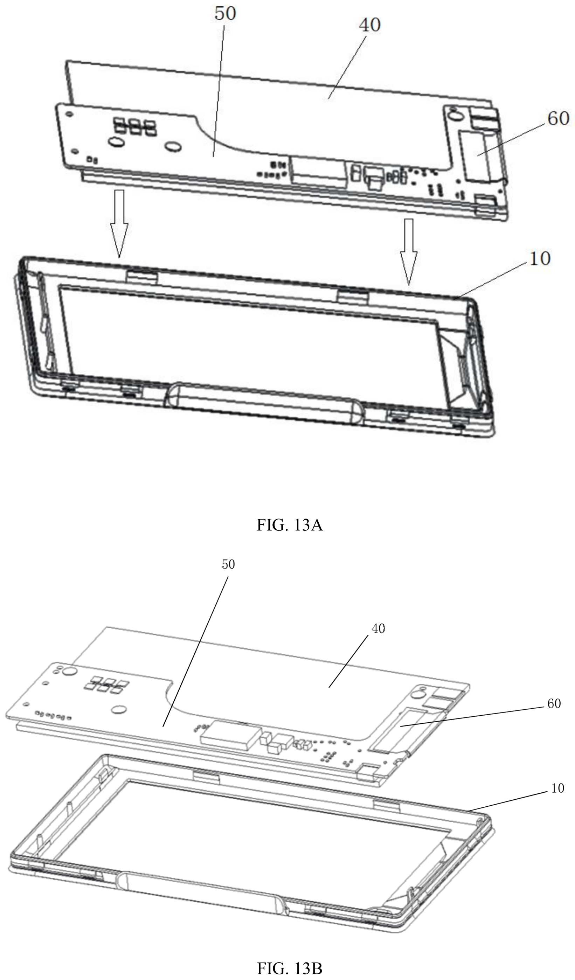

As shown in FIGS. 2A to 16B, the present disclosure provides an electronic shelf label, including a rear housing 20, a battery 30, a screen 40 and a dual-color lens 10, and the dual-color lens 10 is formed by the above injection molding method for the dual-color lens. The battery 30 is provided in the rear housing 20, the screen 40 is connected to the circuit board 50, the dual-color lens 10 is connected to the rear housing 20, and the screen 40 and the circuit board 50 are located between the dual-color lens 10 and the rear housing 20.

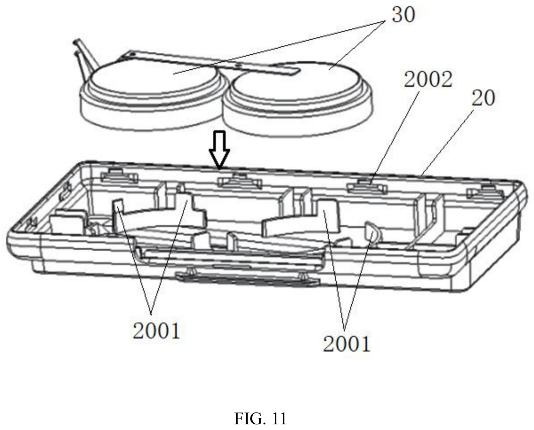

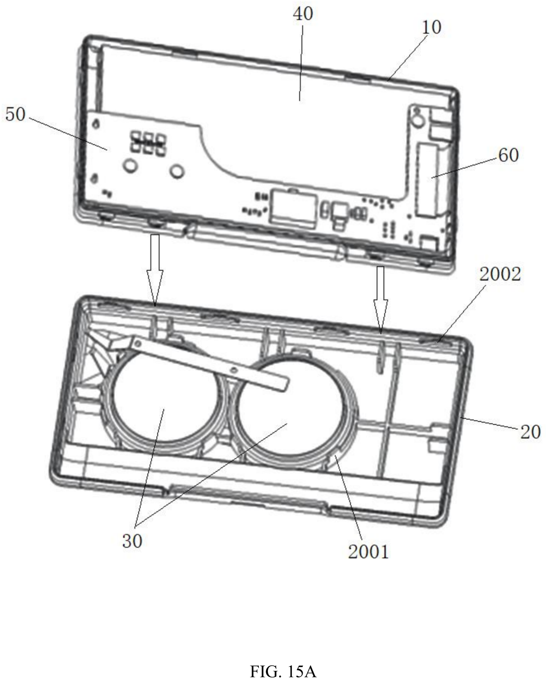

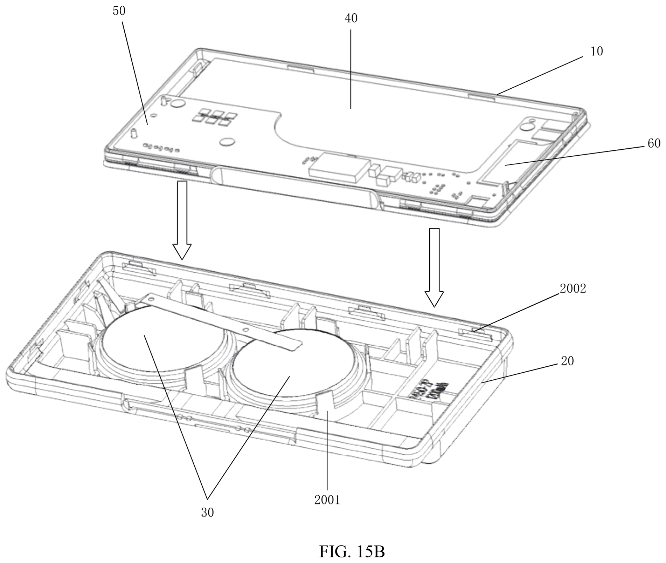

In an optional embodiment of the present disclosure, as shown in FIGS. 11, 15A and 15B, a plurality of convex ribs 2001 are provided within the rear housing 20. The plurality of convex ribs 2001 can cooperate to tightly snap-fit the battery 30. To be specific, the plurality of convex ribs 2001 may be disposed in the rear housing 20 according to the shape of the battery 30 (the plurality of convex ribs 2001 may be disposed at intervals in a circumferential direction of the battery 30). The battery 30 is placed among the plurality of convex ribs 2001, and the end portions of the plurality of convex ribs 2001 may then be heat staked, so that the plurality of convex ribs 2001 cooperate to tightly snap-fit and fix the battery 30, ensuring stable assembly of the battery 30. The plurality of convex ribs 2001 and the rear housing 20 may be, but are not limited to be integrally injection molded.

Further, the battery 30 may be, but is not limited to a button battery assembly.

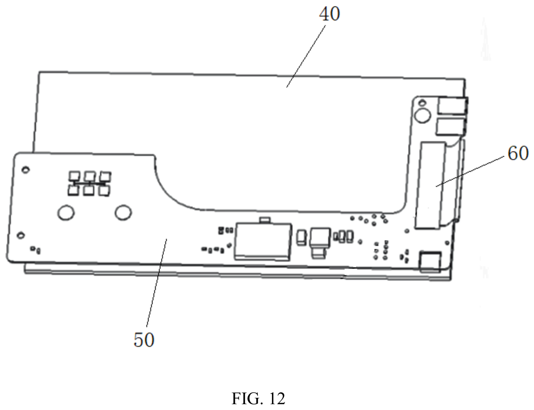

In an optional embodiment of the present disclosure, as shown in FIGS. 12 to 15B, the screen 40 is electrically connected to the circuit board 50 via a connector 60, such that commodity information can be displayed on the screen 40.

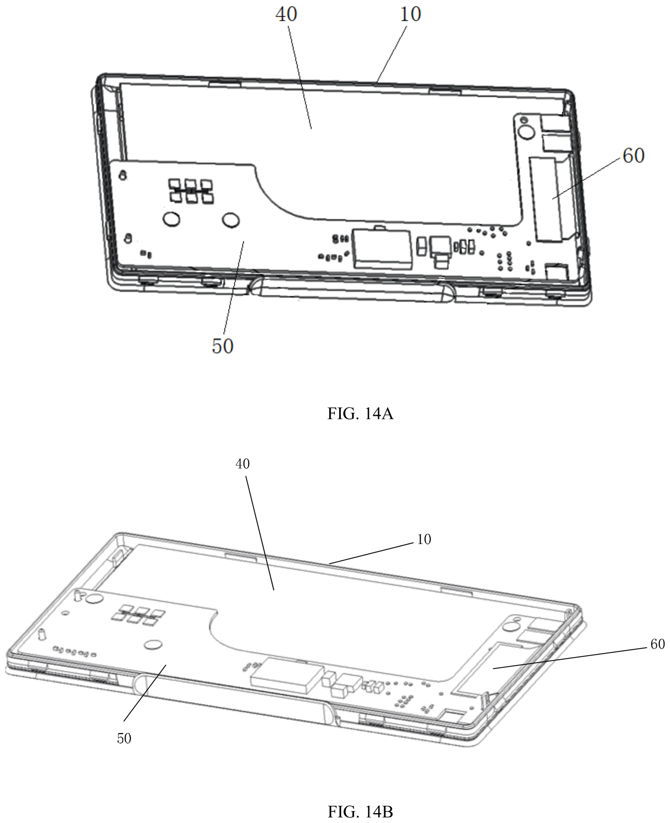

Further, the screen 40 may be, but is not limited to an electronic ink screen. In an optional embodiment of the present disclosure, as shown in FIGS. 5A, 5B, 14A and 14B, the screen 40 and the circuit board 50, after being assembled together, are placed in an integral form in the recess 3 of the dual-color lens 10. By heat staking the end portions of the plurality of heat-staking posts 201 on the second-color lens 2 in the dual-color lens 10, the plurality of heat-staking posts 201 can cooperate to fix the screen 40 and the circuit board 50. The plurality of heat-staking posts 201 may cooperate to snap-fit and fix the screen 40 and the circuit board 50. Through-holes may also be provided at corner regions of the circuit board 50, at least part of the heat-staking posts 201 can be inserted into the through-holes, and after the end portions of the heat-staking posts 201 are heat staked, the screen 40 and the circuit board 50 can also be fixedly assembled with the dual-color lens 10.

In an optional embodiment of the present disclosure, as shown in FIGS. 5A, 5B and 11, a plurality of second snap-fit members 2002 are provided at intervals along an edge of the rear housing 20. The rear housing 20 and the dual-color lens 10 are in snap-fit connection through a cooperation between the plurality of second snap-fit members 2002 and the plurality of first snap-fit members 202 on the second-color lens 2 of the dual-color lens 10, thus assembly and disassembly are facilitated.

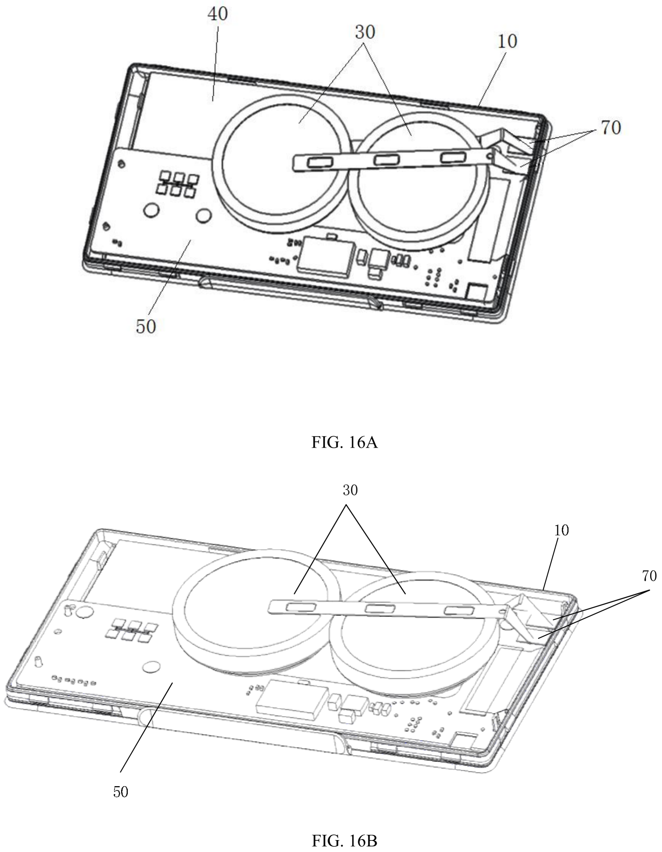

In an optional embodiment of the present disclosure, as shown in FIGS. 16A and 16B, the battery 30 is electrically connected to the circuit board 50 by a spring sheet 70, such that the circuit board 50 can be powered by the battery 30 to ensure normal operation of the electronic shelf label.

The assembly process of the electronic shelf label of the present disclosure is as follows: Firstly, the battery 30 is installed in the rear housing 20, the end portions of the plurality of convex ribs 2001 are heat staked by a heat staking process, and the heat staked convex ribs 2001 cooperate to tightly snap-fit and fix the battery 30; after that, the screen 40 and the circuit board 50 are fixed by press-fitting, and they are electrically connected by a connector 60; then, the assembled screen 40 and circuit board 50 are installed as a whole in the recess 3 of the dual-color lens 10, and by heat staking the end portions of the plurality of heat-staking posts 201 in the recess 3, the plurality of heat-staking posts 201 cooperate to fix the screen 40 and the circuit board 50; at last, the dual-color lens 10 and the rear housing 20 are in snap-fit connection through a cooperation between the plurality of first snap-fit members 202 and the plurality of second snap-fit members 2002, and the assembly of the electronic shelf label is finished.

### Embodiment 5

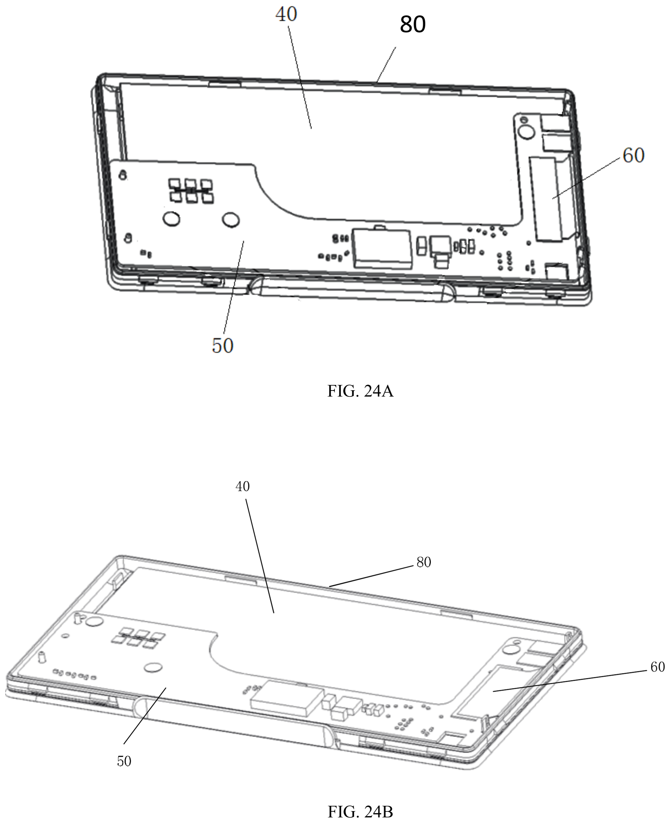

As shown in FIGS. 11, 12 and 17A to 26B, the present disclosure provides an electronic shelf label, including a rear housing 20, a battery 30, a screen 40 and a lens structure 80, and the lens structure 80 is formed by the above injection molding method for the dual-color lens. The battery 30 is provided in the rear housing 20, the screen 40 is connected to the circuit board 50, the lens structure 80 is connected to the rear housing 20, and the screen 40 and the circuit board 50 are located between the lens structure 80 and the rear housing 20.

In an optional embodiment of the present disclosure, as shown in FIGS. 11, 25A and 15B, a plurality of convex ribs 2001 are provided within the rear housing 20. The plurality of convex ribs 2001 can cooperate to tightly snap-fit the battery 30. To be specific, the plurality of convex ribs 2001 may be disposed in the rear housing 20 according to the shape of the battery 30 (the plurality of convex ribs 2001 may be disposed at intervals along a circumferential direction of the battery 30). The battery 30 is placed among the plurality of convex ribs 2001, and the end portions of the plurality of convex ribs 2001 may then be heat staked, so that the plurality of convex ribs 2001 can cooperate to tightly snap-fit and fix the battery 30 to ensure stable assembly of the battery 30. The plurality of convex ribs 2001 and the rear housing 20 may be, but are not limited to be integrally injection molded.

Further, the battery 30 may be, but is not limited to a button battery assembly.

In an optional embodiment of the present disclosure, as shown in FIGS. 12 and 23A to 25B, the screen 40 is electrically connected to the circuit board 50 by a connector 60, such that commodity information can be displayed on the screen 40.

Further, the screen 40 may be, but is not limited to an electronic ink screen.

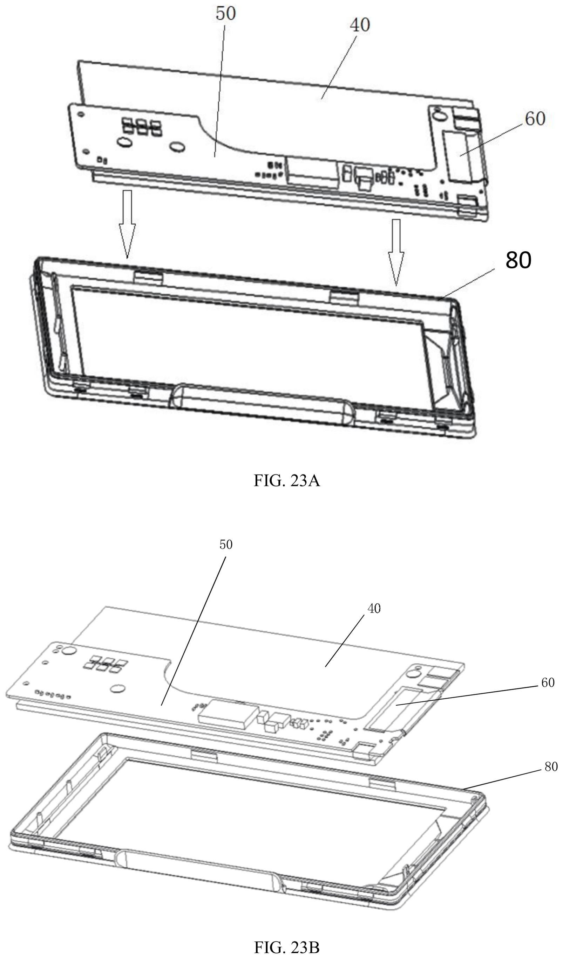

In an optional embodiment of the present disclosure, as shown in FIGS. 23A and 23B, the screen 40 and the circuit board 50, after being assembled together, are placed in an integral form in the recess 3 of the dual-color lens 80. By heat staking the end portions of the plurality of heat-staking posts 201 on the frame 7 in the lens structure 80, the plurality of heat-staking posts 201 can cooperate to fix the screen 40 and the circuit board 50. The plurality of heat-staking posts 201 may cooperate to snap-fit and fix the screen 40 and the circuit board 50. Through-holes may also be provided at corner regions of the circuit board 50, at least part of the heat-staking posts 201 can be inserted into the through-holes, and after heat staking the end portions of the heat-staking posts 201, the screen 40 and the circuit board 50 can also be fixedly assembled with the lens structure 80.

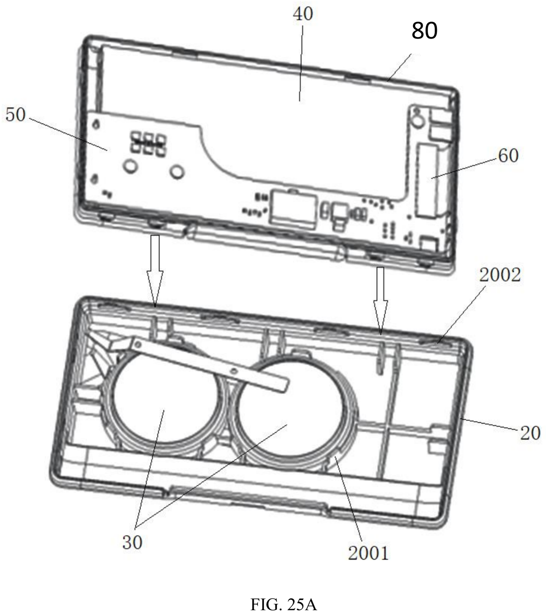

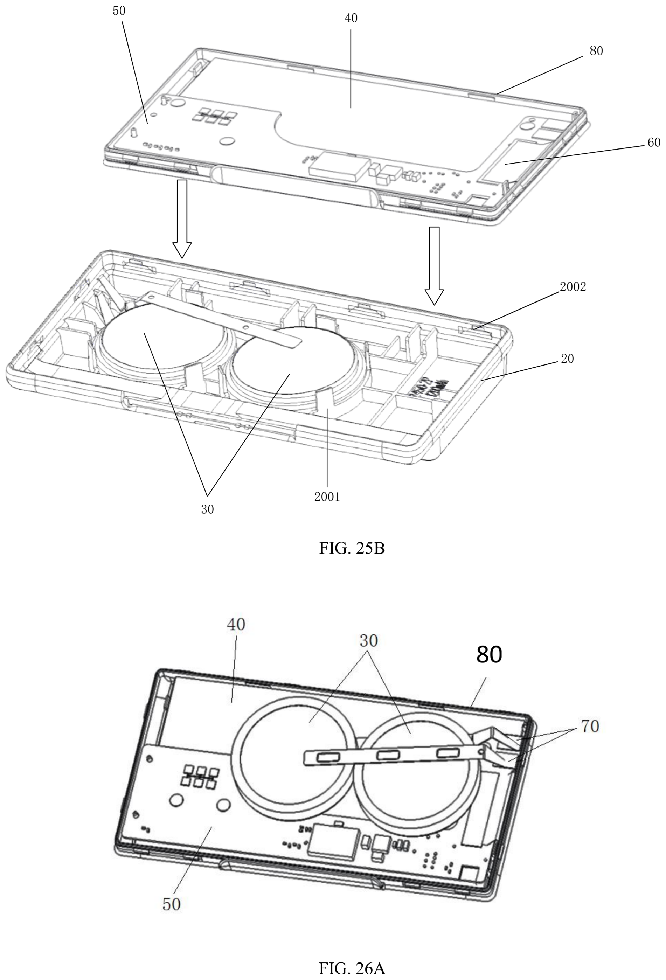

In an optional embodiment of the present disclosure, as shown in FIGS. 11, 25A and 25B, a plurality of second snap-fit members 2002 are provided at intervals along an edge of the rear housing 20. The rear housing 20 and the lens structure 80 are in snap-fit connection through a cooperation between the plurality of second snap-fit members 2002 and the plurality of first snap-fit members 202 on the frame 7 in the lens structure 80, thus assembly and disassembly are facilitated.

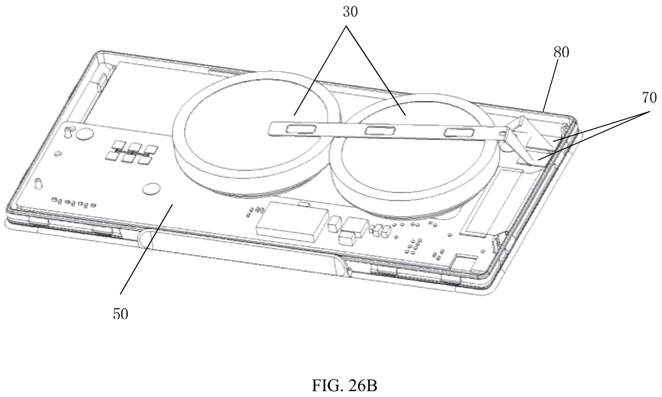

In an optional embodiment of the present disclosure, as shown in FIGS. 26A and 26B, the battery 30 is electrically connected with the circuit board 50 by a spring sheet 70, such that the circuit board 50 can be powered by the battery 30 to ensure normal operation of the electronic shelf label.

The assembly process of the electronic shelf label of the present disclosure is as follows: Firstly, the battery 30 is installed in the rear housing 20, the end portions of the plurality of convex ribs 2001 are heat staked by a heat staking process, and the heat staked convex ribs 2001 cooperate to tightly snap-fit and fix the battery 30; after that, the screen 40 and the circuit board 50 are fixed by press-fitting, and they are electrically connected by a connector 60; then, the assembled screen 40 and circuit board 50 are installed as a whole in the recess 3 of the lens structure 80, and by heat staking the end portions of the plurality of heat-staking posts 201 in the recess 3, the plurality of heat-staking posts 201 cooperate to fix the screen 40 and the circuit board 50; at last, the lens structure 80 and the rear housing 20 are in snap-fit connection through a cooperation between the plurality of first snap-fit members 202 and the plurality of second snap-fit members 2002, and the assembly of the electronic shelf label is finished.

The above are only exemplary specific embodiments of the present disclosure, and are not used for limiting the scope of the present disclosure. Any equivalent variations and amendments made by a person skilled in the art without departing from the idea and principle of the present disclosure should be included in the protection scope of the present disclosure.

## Claims

1. An injection molding method for a dual-color lens, comprising
positioning a first mold in a horizontal direction;
feeding a first material in a molten state into a cavity of the first mold through a first pouring gate on the first mold, for injection molding a first-color lens in a flat plate-shape along the horizontal direction; and
feeding a second material in a molten state into a cavity of a second mold through a second pouring gate on the second mold, for injection molding a second-color lens on the first-color lens.

2. The injection molding method for the dual-color lens according to claim 1, wherein the first-color lens is in a transparent flat plate-shape, the first-color lens is provided with a light hole for allowing light to pass through, and the first pouring gate is located on the first mold at a position corresponding to the light hole on the first-color lens.

3. The injection molding method for the dual-color lens according to claim 2, wherein the first material is polymethyl methacrylate with a hardness greater than a 3H hardness.

4. The injection molding method for the dual-color lens according to claim 1 or 2, wherein a flow area of the second pouring gate increases gradually along a flow direction of the second material.

5. The injection molding method for the dual-color lens according to claim 4, wherein the second-color lens is in a colored annular shape, and the second-color lens is bonded to the first-color lens along an edge of the first-color lens to form an integral structure.

6. The injection molding method for the dual-color lens according to claim 5, wherein the second pouring gate is located on the second mold at a position corresponding to a side edge of the second-color lens, and the second pouring gate is fan-shaped or trapezoidal.

7. The injection molding method for the dual-color lens according to claim 5, wherein the second material is Acrylonitrile Butadiene Styrene (ABS) plastic, or a composite material of ABS plastic and polycarbonate.

8. The injection molding method for the dual-color lens according to claim 1, wherein a melting point of the first material is higher than that of the second material.

9. The injection molding method for the dual-color lens according to claim 1, wherein during injection molding of the first-color lens, the first mold is place in a horizontal direction, a plurality of positioning members are respectively arranged on a periphery of the first mold, and the plurality of positioning members cooperate to tightly abut against side edges of the first mold, enabling the plurality of positioning member to cooperate to tightly abut against a side edges of the first-color lens.

10. The injection molding method for the dual-color lens according to claim 9, wherein the first-color lens is injection molded at a first station, and the second-color lens is injection molded at a second station; and
the plurality of positioning members cooperate to tightly abut against a side edges of the first-color lens, and move the first-color lens from the first station to the second station.

11. The injection molding method for the dual-color lens according to claim 1, wherein the second-color lens is provided with a heat-staking post for fixing a circuit board.

12. The injection molding method for the dual-color lens according to claim 1, wherein the second-color lens is provided with a plurality of first snap-fit members for snap-fit connection with a main body of an electronic shelf label.

13. The injection molding method for the dual-color lens according to claim 1, wherein a barcode area for placing a barcode is provided on the second-color lens.

14. The injection molding method for the dual-color lens according to claim 1, wherein a predetermined welding area on the second-color lens is provided with an ultrasonic welding line for ultrasonic welding.

15. An electronic shelf label, comprising:
a rear housing;
a battery, wherein the battery is disposed inside the rear housing;
a screen, wherein the screen is connected to a circuit board; and
a dual-color lens, wherein the dual-color lens is formed by the injection molding method for the dual-color lens according to any one of claims 1 to 14, the dual-color lens is connected to the rear housing, and the screen and the circuit board are located between the dual-color lens and the rear housing.

16. The electronic shelf label according to claim 15, wherein the rear housing is provided with a plurality of convex ribs, and the plurality of convex ribs, after heat staking, are capable of cooperating to snap-fit the battery tightly.

17. The electronic shelf label according to claim 15, wherein the screen and the circuit board are disposed inside the dual-color lens, and a plurality of heat-staking posts on the second-color lens of the dual-color lens are capable of cooperating to fix the screen and the circuit board.

18. The electronic shelf label according to claim 15, wherein a plurality of second snap-fit members are provided at an edge of the rear housing, and the rear housing and the dual-color lens are in snap-fit connection through a cooperation between the plurality of second snap-fit members and the plurality of first snap-fit members on the second-color lens of the dual-color lens.
